# EUROPÄISCHE PATENTSCHRIFT

(11) **EP 1 116 821 B1**
(45) Veröffentlichungstag und Bekanntmachung des Hinweises auf die Patenterteilung: **20.08.2003**
(21) Anmeldenummer: 00121520.1
(22) Anmeldetag: 30.09.2000
(51) Int. Cl.: D21F 3/02, D21G 1/02

(54) **Pressmantel, Pressband oder Walzenbeschichtung**
Press blanket, press belt or roll cover
Courroie de pressage, bande de pressage ou revêtement pour rouleau

(30) Priorität: 24.11.1999 DE 19956352
(43) Veröffentlichungstag der Anmeldung: 18.07.2001
(73) Patentinhaber: Schäfer KG, 71272 Renningen (DE)
(72) Erfinder: Schäfer, Karl-Ulrich, 70195 Stuttgart (DE)
(74) Vertreter: Lorenz, Werner, Dr.-Ing.

(56) Entgegenhaltungen:
- DE-A- 19 610 949
- DE-A- 19 650 335
- GB-A- 651 969

## Beschreibung

Die Erfindung betrifft einen Preßmantel, Preßband oder Walzenbeschichtung für die Papier-, Zellstoff-, Tissue-, Druck- oder Textilindustrie nach Anspruch 1.

In der DE 197 54 631 C1 ist ein Verfahren zur Herstellung eines Preßmantels und ein Preßmantel beschrieben, der ein Trägermaterial bzw. Substrat aufweist, das mit einer Prepolymermasse beschichtet ist. Das Substrat soll dabei dem Preßmantel die ausreichende Stabilität geben, welche alleine durch die Prepolymermasse nicht gewährleistet ist. Die Prepolymermasse stellt als elastisches und ölundurchlässiges Band das "Arbeitsband" dar, auf welchem ein Filz, eine Papierbahn oder ähnliches läuft.

Nachteilig ist, daß die bekannten Preßmäntel relativ aufwendig in der Herstellung sind und darüber hinaus auch Haltbarkeit und Gleitlaufeigenschaften begrenzt sind.

Die DE 196 50 335 A1 offenbart einen Preßmantel, ein Preßband oder eine Walzenschichtung für die Papier-, Zellstoff-, Tissue-, Druck- oder Textilindustrie aus einem Kautschukpolymermaterial in Mehrschichtaufbau, wobei zur Erhöhung des Elastizitätsmoduls Naturund/oder Synthetikfasern mit einer Ausrichtung ihrer Längsachsen in Laufrichtung eingebettet sind. Nachteilig dabei ist jedoch, die relativ aufwendige Herstellung.

Die GB 651 969 beschreibt einen Walzenüberzug mit einem Spannungsabschnitt aus hartem, elastischen Kautschuk, einem Kompressionsabschnitt aus weichem, polsternden Kautschuk, das Draht als Versteifungselemente enthält und einem neutralen Achsendabschnitt.

Der vorliegenden Erfindung liegt daher die Aufgabe zugrunde, die Nachteile des Standes der Technik zu vermeiden, insbesondere einen Preßmantel zu schaffen, der bei einfachem Aufbau und Öldichtigkeit genügend elastisch ist, gleichzeitig jedoch hohe Standzeiten und eine gute Gleiteigenschaft bietet.

Erfindungsgemäß wird diese Aufgabe durch das in Anspruch 1 genannte Material aus einem Kautschukpolymer aus Verschnitten von verschnittenen Kautschukmaterialien gelöst, in welches zur Erhöhung des Elastizitätsmodules 3 - 20 % Natur- und/oder Synthetikfasern auf 100 Gewichtsteile Kautschukpolymer so eingebettet sind, daß eine Ausrichtung ihrer Längsachsen in Laufrichtung des Mantels, des Bandes oder der Beschichtung erfolgt.

Überraschenderweise hat sich gezeigt, daß ein Kautschukpolymer aus Verschnitten, welches entsprechend mit den erfindungsgemäßen Fasern versehen ist, bei einer Ausrichtung der Fasern in Laufrichtung des Mantels, des Bandes oder der Beschichtung eine deutliche Erhöhung des Elastizitätsmoduls bringt. Gleichzeitig ist das Kautschukpolymer öldicht, ausreichend elastisch und besitzt hohe Standzeiten.

Dadurch, daß der Preßmantel nur aus einer Schicht besteht, ist dessen Herstellung im Vergleich zum Stand der Technik auch deutlich einfacher. Selbstverständlich ist auch eine Art Mehrschichtaufbau möglich, wobei jedoch stets als Basismaterial ein Kautschukpolymer vorgesehen ist. Im letzteren Falle wird man jedoch die Fasern zur Verstärkung nur in einem Teilbereich-bezogen auf die Dicke des Preßmantels - aufbringen. So bietet sich z.B. eine faserverstärkte Teilschicht im inneren Bereich des Preßmantels an, um hier eine entsprechende Stabilität und einen hohen Elastizitätsmodul zu geben. Auf der Außenseite bzw. auf der zu behandelnden bzw. stützenden Bahnseite ist im allgemeinen eine gute Elastizität gewünscht, was entsprechend bei einem Mehrschichtaufbau durch die erfindungsgemäßen Maßnahmen erreicht werden kann.

Die Beimischung von Naturkautschuk im Rahmen der Erfindung ist ebenso möglich.

Als Fasern können in vorteilhafter Weise Stapelfasern, d.h. gehackte Fasern, verwendet werden. Als Materialien hierfür sind verschiedene Werkstoffe geeignet. Als besonders vorteilhaft haben sich u.a. Fasern aus Aramiden, Polyestern, Kohlefasern und Baumwolle nebst Mischungen daraus herausgestellt.

Zusätzlich können dem Kautschukpolymer auch noch Füllstoffe, Weichmacher, Vernetzungsmittel, Antioxidantien, Hilfsmittel und andere Zusatzstoffe beigemischt werden.

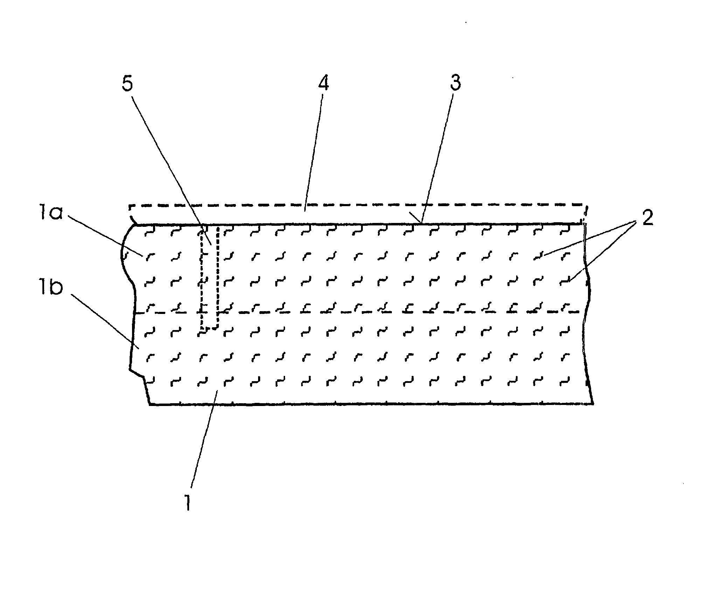

Vorteilhafte Weiterbildungen und Ausgestaltungen ergeben sich aus den übrigen Unteransprüchen und aus dem nachfolgend anhand der Zeichnung prinzipmäßig beschriebenen Ausführungsbeispiel.

Die einzige Figur der Zeichnung zeigt in stark vergrößertem Maßstab einen Ausschnitt aus einem Preßmantel, der z.B. für die Papier-, Zellstoff-, Tissue-, Druckoder Textilindustrie vorgesehen ist. Ebenso kann ein derartiger Preßmantel bzw. seine Ausgestaltung auch als Walzenbeschichtung für die gleichen oder auch andere Industriezweige vorgesehen sein. So sind als Einsatzgebiete für Walzenbeschichtungen die Aluminium-, Stahl- und die Druckindustrie denkbar.

Der Preßmantel besteht aus einem Kautschukpolymer 1, in das Natur- oder Synthetikfasern 2 eingebettet sind. Je nach Material der Fasern können diese chemisch gebunden oder auch ungebunden in dem Kautschukpolymer 1 liegen. Die Dosierung richtet sich nach dem jeweiligen Anwendungsfall und auch nach den verwendeten Fasern. Im allgemeinen wird man 3 bis 20 Gewichtsteile Fasern auf 100 Gewichtsteile Kautschukpolymer 1 einbringen.

Zur Herstellung des Preßmantels wird in das Kautschukpolymer 1 in einem Knetermischwerk oder einem Walzenmischwerk in die teigartige Masse die gewünschte Menge von Fasern eingemischt. Anschließend wird die Mischung in Bahnen auskalandriert, wobei sich die Fasern in Laufrichtung ausrichten und auf diese Weise die Erhöhung des Elastizitätsmoduls und damit die Verschleißfestigkeit des Preßmantels deutlich verbessern. Damit erhält man im Unterschied zum Stand der Technik einen einteiligen homogenen Preßmantel. Dies hat den weiteren Vorteil, daß man bei einer Profilierung der Außen- bzw. Oberseite 3 des Preßmantels, welches die Kontaktfläche mit einer darauf laufenden Bahn, z.B. einer Papierbahn oder einem Filz 4 (gestrichelt dargestellt), darstellt, entsprechende Blindbohrungen oder Rillierungen 5 (gestrichelt dargestellt) fast bis zur Unterseite durchziehen kann, da kein Substrat oder Trägermaterial in Form eines Geflechtes oder Gewebes vorhanden ist. Dies bedeutet, man kann damit entweder tiefere Bohrungen oder Rillen einbringen oder die Dicke des Preßmantels entsprechend reduzieren.

Als Materialausformung für den Preßmantel kommt neben der erwähnten Kalanderbahn auch ein mittels Extruder geformter Streifen, ca. 0.5 bis 5 mm stark und 5 bis 50 mm breit. In diesem Falle findet die Ausrichtung der Faser im Mundstück - als Düse - statt.

Als Kautschukpolymer 1 können z.B. folgende Arten vorgesehen sein: Butadien, Polybutadien, Acrylnitril-Butadien, Chloropren, chlorsulfoniertes Polyethylen oder hydrierter Acrylnitrilkautschuk (HNBR) oder Mischungen daraus.

Als synthetische Faserstoffe haben sich als geeignet herausgestellt: Aramide, Kohlefasern, Baumwolle, Polyester, Polyamide oder Mischungen daraus. Von den Aramiden ist unter anderem Polyparaphenylenterephtalamid geeignet.

Die Faserlänge der Stapelfasern kann z.B. zwischen 0,3 und 2,5 mm und deren Stärke ca. 5 bis 50 µ betragen. Selbstverständlich sind im Bedarfsfalle auch noch andere Dimensionen möglich.

Im Bedarfsfalle kann das Kautschukpolymer 1 auch in einem Mehrschichtaufbau aufgebaut sein mit einer äußeren Schicht bzw. einem äußeren Bereich 1a, die bzw. der sich auf der Seite der abzustützenden Bahn, z.B. einem Filz 4, befindet und einem inneren, unteren Bereich 1b. In der Figur ist die Trennlinie gestrichelt angedeutet, wobei sich in diesem Falle die Fasern 2 nur auf einer Seite bzw. in einem Bereich, vorzugsweise in dem Bereich 1b, befinden. Der von den Fasern 2 freie Bereich ist in diesem Falle elastischer.

Zusätzlich können dem Kautschukpolymer 1 Füllstoffe und/oder Weichmacher und/oder Vernetzungsmittel und/oder Antioxidantien und/oder andere Hilfsmittel beigemischt bzw. in diese eingebracht werden.

Als Weichmacher sind z.B. Monomer- oder Polymer-Weichmacher auf Esterbasis möglich. Als Füllstoffe kann Kieselsäure und/oder Ruß vorgesehen sein und als Vernetzungsmittel sind z.B. Schwefel und/oder Peroxide möglich.

## Patentansprüche

1. Preßmantel, Preßband oder Walzenbeschichtung für die Papier-, Zellstoff-, Tissue-, Druck- oder Textilindustrie aus einem Kautschukpolymer (1) aus Verschnitten von verschiedenen Kautschukmaterialien in das zur Erhöhung des Elastizitätsmoduls 3 bis 20 % Natur- und/oder Synthetikfasern (2) auf 100 Gewichtsteile Kautschukpolymer so eingebettet sind, daß eine Ausrichtung ihrer Längsachsen in Laufrichtung des Mantels, des Bandes (4) oder der Beschichtung erfolgt.

2. Preßmantel nach Anspruch 1,
**dadurch gekennzeichnet, daß**
das Kautschukpolymer (1) Butadien, Polybutadien, Acrylnitril-Butadien, Chloropren, chlorsulfoniertes Polyethylen oder hydrierter Acrylnitrilkautschuk (HNBR) oder Mischungen daraus aufweist.

3. Preßmantel nach Anspruch 1 oder 2,
**dadurch gekennzeichnet, daß**
dem Kautschukpolymer (1) Naturkautschuk beigemischt ist.

4. Preßmantel nach einem der Ansprüche 1 bis 3,
**dadurch gekennzeichnet, daß**
die Natur- und/oder Synthetikfasern (2) als Stapelfasern in das Kautschukpolymermaterial (1) eingebracht sind.

5. Preßmantel nach einem der Ansprüche 1 bis 4,
**dadurch gekennzeichnet, daß**
als Fasern Aramide, Kohlefasern, Baumwolle, Polyester, Polyamide oder Mischungen daraus vorgesehen sind.

6. Preßmantel nach einem der Ansprüche 1 bis 5,
**dadurch gekennzeichnet, daß**
die Fasern eine Länge von ca. 0,3 bis 2,5 mm und eine Dicke von ca. 5 bis 50 µ aufweisen.

7. Preßmantel nach einem der Ansprüche 1 bis 6,
**dadurch gekennzeichnet, daß**
in das Kautschukpolymer (1) Füllstoffe und/oder Weichmacher und/oder Vernetzungsmittel und/oder Antioxidantien und/oder Hilfsmittel eingebracht sind.

8. Preßmantel nach Anspruch 7,
**dadurch gekennzeichnet, daß**
als Weichmacher Monomer- und Polymer-Weichmacher auf Esterbasis vorgesehen sind.

9. Preßmantel nach Anspruch 7 und 8,
**dadurch gekennzeichnet, daß**
als Füllstoffe Kieselsäure und/oder Ruß vorgesehen ist.

10. Preßmantel nach einem der Ansprüche 7 bis 9,
**dadurch gekennzeichnet, daß**
als Vernetzungsmittel Schwefel und/oder Peroxide vorgesehen sind.

11. Preßmantel nach einem der Ansprüche 1 bis 10,
**dadurch gekennzeichnet, daß**
das Kautschukpolymer (1) in einem Mehrschichtaufbau aufgebaut ist.

12. Preßmantel nach Anspruch 11,
**dadurch gekennzeichnet, daß**
die Fasern nur über einen Teilbereich - bezogen auf die Dicke des Kautschukpolymers (1) - vorgesehen sind.

13. Preßmantel nach Anspruch 12,
**dadurch gekennzeichnet, daß**
die Fasern auf dem von der Außenseite abgewandten Bereich (1b) des Kautschukpolymers (1) eingebettet sind.

14. Preßmantel nach einem der Ansprüche 1 bis 13,
**dadurch gekennzeichnet, daß**
das Kautschukpolymer (1) mit einer Profilierung auf seiner dem zu behandelnden Teil zugewandten Seite versehen ist.

15. Preßmantel nach Anspruch 14,
**dadurch gekennzeichnet, daß**
die Profilierung durch in das Kautschukpolymer (1) gerichtete Blindbohrungen und/oder als Rillierung (5) ausgebildet ist.

## Claims

1. A press sleeve or blanket, press belt or roll cover for the paper, pulp, tissue, printing or textile industry, made from a rubber polymer (1) made from scraps of different rubber materials in which, to increase the modulus of elasticity, 3 to 20 % of natural and/or synthetic fibres (2) per 100 parts by weight of rubber polymer are so embedded that their longitudinal axes are oriented in the running direction of the sleeve or blanket, the belt (4) or the cover.

2. A press sleeve or blanket according to claim 1,
**characterised in that**
the rubber polymer (1) comprises butadiene, polybutadiene, acrylonitrile/butadiene, chloroprene, chlorosulfonated polyethylene or hydrogenated acrylonitrile rubber (HNBR) or mixtures thereof.

3. A press sleeve or blanket according to claim 1 or 2,
**characterised in that** natural rubber is admixed with the rubber polymer (1).

4. A press sleeve or blanket according to one of claims 1 to 3,
**characterised in that**
the natural and/or synthetic fibres (2) are introduced into the rubber polymer material (1) as staple fibres.

5. A press sleeve or blanket according to one of claims 1 to 4,
**characterised in that**
aramids, carbon fibres, cotton, polyester, polyamides or mixtures thereof are provided as the fibres.

6. A press sleeve or blanket according to one of claims 1 to 5,
**characterised in that**
the fibres exhibit a length of approx. 0.3 to 2.5 mm and a thickness of approx. 5 to 50µ.

7. A press sleeve or blanket according to one of claims 1 to 6,
**characterised in that**
fillers and/or plasticisers and/or vulcanising agents and/or antioxidants and/or auxiliary substances are introduced into the rubber polymer (1).

8. A press sleeve or blanket according to claim 7,
**characterised in that**
ester-based monomeric and polymeric plasticisers are provided as the plasticisers.

9. A press sleeve or blanket according to claim 7 and 8,
**characterised in that**
silica and/or carbon black are provided as the fillers.

10. A press sleeve or blanket according to one of claims 7 to 9,
**characterised in that**
sulfur and/or peroxides are provided as the vulcanising agents.

11. A press sleeve or blanket according to one of claims 1 to 10,
**characterised in that**
the rubber polymer (1) is of multilayer construction.

12. A press sleeve or blanket according to claim 11,
**characterised in that**
the fibres are provided only over a partial area, relative to the thickness of the rubber polymer (1).

13. A press sleeve or blanket according to claim 12,
**characterised in that**
the fibres are embedded on the area (1b) of the rubber polymer (1) remote from the outside.

14. A press sleeve or blanket according to one of claims 1 to 13,
**characterised in that**
the rubber polymer (1) is provided with profiling on its side facing the part to be treated.

15. A press sleeve or blanket according to claim 14,
**characterised in that**
the profiling takes the form of blind holes arranged in the rubber polymer (1) and/or of grooving (5).

## Revendications

1. Revêtement de pression, bande de pression ou revêtement de rouleau pour l'industrie du papier, de la cellulose, des tissus, de l'impression ou du textile, fait d'un polymère caoutchouteux (1) issu de fragments de différentes matières caoutchouteuses dans lequel, pour élever le module d'élasticité, sont incorporés 3 à 20 % de fibres naturelles et/ou synthétiques (2) pour 100 parties en poids du polymère caoutchouteux, de telle manière qu'il se produise une orientation de leurs axes longitudinaux dans la direction de la circulation du revêtement, de la bande (4) ou de la couche.

2. Revêtement de pression selon la revendication 1,
**caractérisé en ce que**
le polymère caoutchouteux (1) comprend du butadiène, du polybutadiène, de l'acrylonitrile-butadiène, du chloroprène, du polyéthylène chlorosulfoné ou du caoutchouc d'acrylonitrile hydrogéné (HNBR) ou des mélanges de ces substances.

3. Revêtement de pression selon la revendication 1 ou 2,
**caractérisé en ce que**
du caoutchouc naturel est mélangé au polymère caoutchouteux (1).

4. Revêtement de pression selon l'une des revendications 1 à 3,
**caractérisé en ce que**
les fibres naturelles et/ou synthétiques (2) sont incorporées dans la matière de polymère caoutchouteux (1) sous la forme de fibres discontinues.

5. Revêtement de pression selon l'une des revendications 1 à 4,
**caractérisé en ce que**
des aramides, des fibres de carbone, du coton, du polyester, des polyamides ou des mélanges de ces matériaux sont prévus comme fibres.

6. Revêtement de pression selon l'une des revendications 1 à 5,
**caractérisé en ce que**
les fibres possèdent une longueur d'environ 0,3 à 2,5 mm et une épaisseur d'environ 5 à 50 µ.

7. Revêtement de pression selon l'une des revendications 1 à 6,
**caractérisé en ce que**
dans le polymère caoutchouteux (1) sont incorporés des charges et/ou des plastifiants et/ou des agents de réticulation et/ou des antioxydants et/ou des adjuvants.

8. Revêtement de pression selon la revendication 7,
**caractérisé en ce que**
des plastifiants monomères et polymères à base d'ester sont prévus comme plastifiants.

9. Revêtement de pression selon les revendications 7 et 8,
**caractérisé en ce que**
de la silice et/ou du noir de carbone sont prévus comme charges.

10. Revêtement de pression selon l'une des revendications 7 à 9,
**caractérisé en ce que**
du soufre et/ou des peroxydes sont prévus comme agents de réticulation.

11. Revêtement de pression selon l'une des revendications 1 à 10,
**caractérisé en ce que** le polymère caoutchouteux (1) a la constitution d'une structure multicouche.

12. Revêtement de pression selon la revendication 11,
**caractérisé en ce que**
les fibres sont prévues exclusivement sur une région partielle rapportée à l'épaisseur du polymère caoutchouteux (1).

13. Revêtement de pression selon la revendication 12,
**caractérisé ence que**
les fibres sont incorporées sur la région (1b) du polymère caoutchouteux (1) qui est éloignée du côté extérieur.

14. Revêtement de pression selon l'une des revendications 1 à 13,
**caractérisé en ce que**
le polymère caoutchouteux (1) est pourvu d'un profilage sur son côté dirigé vers l'élément à traiter.

15. Revêtement de pression selon la revendication 14,
**caractérisé en ce que**
le profilage est formé par des perçages borgnes dirigés dans le sens qui pénètre dans le polymère caoutchouteux (1) et/ou par des striures (5).
